# EUROPEAN PATENT SPECIFICATION

(11) **EP 1 106 095 B1**
(45) Date of publication and mention of the grant of the patent: **19.01.2005**
(21) Application number: 00124206.4
(22) Date of filing: 08.11.2000
(51) Int. Cl.: A44B 11/25

(54) **Seat belt buckle for use with a pretensioner**
Sicherheitsgurt mit Schlossstrammer
Boucle pour ceinture de sécurité utilisée avec un prétendeur

(30) Priority: 06.12.1999 US 455976
(43) Date of publication of application: 13.06.2001
(73) Proprietor: KEY SAFETY SYSTEMS, INC., Sterling Heights, Michigan 48314 (US)
(72) Inventor: Kohlndorfer, Kenneth.H, Michigan 48066 (US); Petersen, Carl.M, Waterford, Michigan 48329 (CA); Gill, Harjeet, Michigan 48314 (US); Longley, Rosemary, Michigan 48225 (US); Korona, Tammy, Macomb County Michigan 48036 (US); Foley, Caryn, Michigan 48071 (US); Good, Craig, Michigan 48037 (US); He, Simon.X, Michigan 48084 (CA); Jain, Tony, Michigan 480309 (US); Refior, Lawrence. M, Michigan 48065 (US); Richards, Susan.A, Michigan 48310 (US)
(74) Representative: Müller-Boré & Partner Patentanwälte

(56) References cited:
- EP-A- 0 945 082
- DE-A- 3 842 453
- US-A- 5 704 099
- US-A- 5 742 987
- US-A- 5 765 266
- US-A- 5 996 193

## Description

The present invention generally relates to buckles for seat belts and more particularly to that type of buckle usable with a buckle pretensioner or belt tightener.

The present invention relates to a new and improved buckle for use with a buckle pretensioner of a safety belt system and one that resists the very high g-forces generated when the pretensioner is activated. As known in the art, these g-forces arise as the pretensioner is rapidly moved to remove belt slack about an occupant. At the end of a pretensioning stroke the buckle frame (typically attached to the pretensioner) is suddenly stopped, however, due to inertia, the button will continue to move relative to the now stopped buckle frame. This movement of the button, unless compensated may cause, in certain situations, the latch plate of the buckle to move out of its locked position, permitting the tongue to unlatch.

As an example, US-A-5,742,987 relates to a seat-belt buckle for use with a pretensioner of a safety belt system, comprising a frame, adapted to be connected to the pretensioner, a latch plate and a weight assembly pivotally connected to the end portions of the latch plate to generate a force upon the latch plate during operation of the pretensioner tending to urge the latch plate into a first opening of the frame.

US-A-5,704,099 relates to a seat belt buckle for use with a seat belt pretensioner having an inertia locking mechanism, wherein a latch member in the buckle has a locking position for engaging a seat belt locking tongue to block the removal of the tongue from the buckle.

WO-A-99/65350, which is a document in accordance with Art. 54(3) EPC, relates to a seat belt buckle used with a pretensioner, wherein the buckle has a latch plate and portions movable within slots in the latch plate, the latch plate moves between a latch position within the latch opening of the frame and within the latch opening of the tongue to an unlatched position outside of the latch openings.

It is an object of the present invention to provide a seat belt buckle for use with a buckle pretensioner of a safety belt system, which resists the very high g-forces generated when the pretensioner is activated.

This object is fulfilled by a seat belt buckle having the features disclosed in claim 1.

Accordingly, the invention comprises: a seat belt buckle operable with a pretensioner connected thereto for moving the buckle a determinable distance to remove slack of the seat belt about an occupant, the buckle comprising: a frame, adapted to be connected to the pretensioner, defining a tongue-receiving opening to receive a tongue as the tongue is moved in a first direction, the frame having a first latch opening therein, and opposing frame sides, each side including a latch plate slot arranged generally perpendicular to the first direction. A weight assembly, pivotably connected to the frame to generate a line contact force upon the top of the latch plate during operation of the pretensioner, forces the latch plate into the latch opening. A manually moveable button is operatively received upon the frame having ramps for lifting the latch plate to its unlatched position. A second embodiment of the invention provides a supplemental button-blocking surface on the weight to interact with the button.

### Brief Description of the Drawings

FIG. 1 is an assembly view showing many of the major elements of the present invention.

FIG. 2 shows upper and lower frame parts matingly connected with other button parts in their latched condition.

FIG. 2a shows the buckle parts in an unlatched condition.

FIG. 3 is a bottom plan view of the buckle.

FIGS. 4 and 4a show a front plan and side plan view of a latch plate.

FIG. 4b is an alternate embodiment of the latch plate.

FIG. 5 is an isolated isometric view of a weight.

FIGS. 6a and 6b are respective side plan and front plan views of a weight.

FIG. 7 shows a cross-sectional view of an assembled buckle in its latched configuration.

FIG. 8 is a cross-sectional view showing the buckle in its unlatched configuration.

FIG. 9 is a side plan view of the buckle in a latched condition.

FIG. 9a is a rear isometric view of a button.

FIG. 9b is a rear isometric view of the buckle frame.

FIG. 9c is a front plan view of the buckle.

FIG. 10 shows an isometric view of an alternate embodiment of the invention.

FIG. 11 is a side cross-sectional view generally taken to show the relationship of the ears or projections of this embodiment to the button.

FIG. 12 shows a circuit for a sensor.

### Detailed Description of the Invention

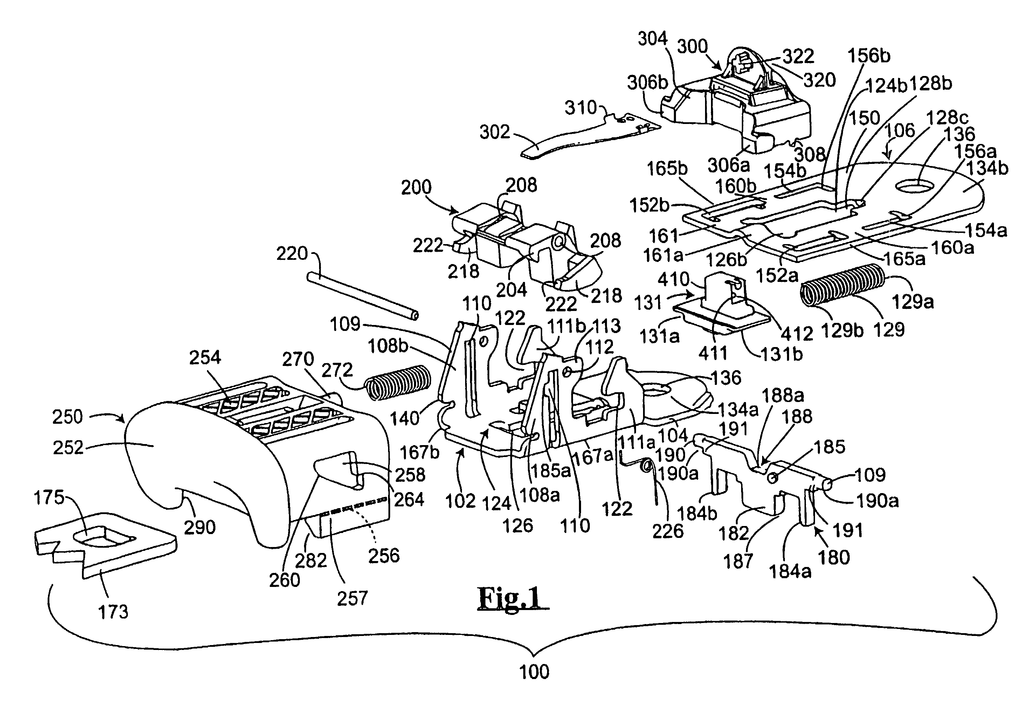

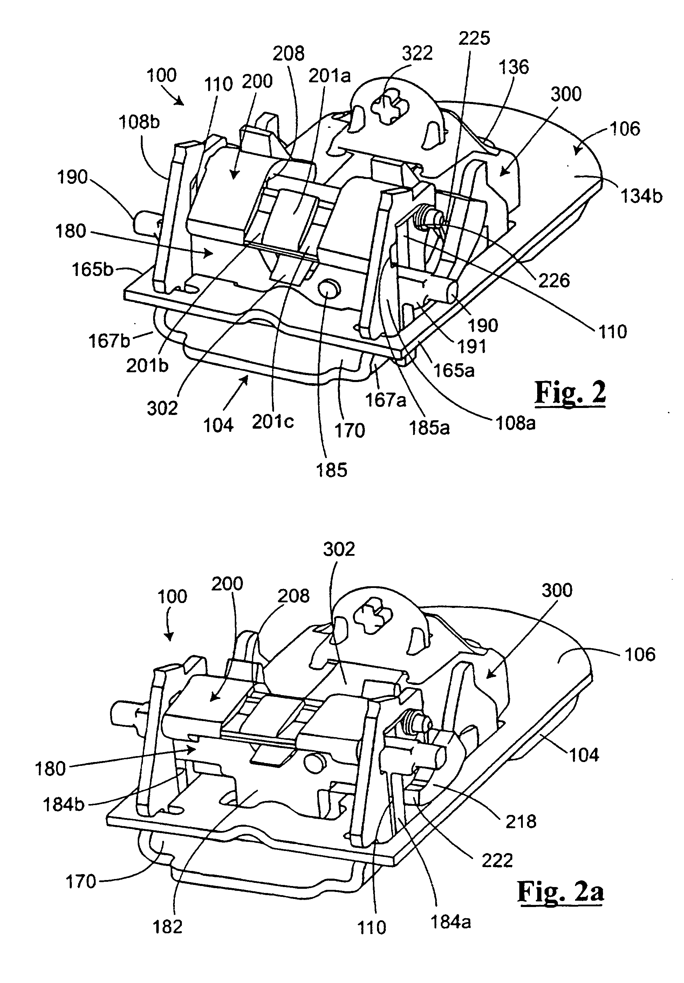

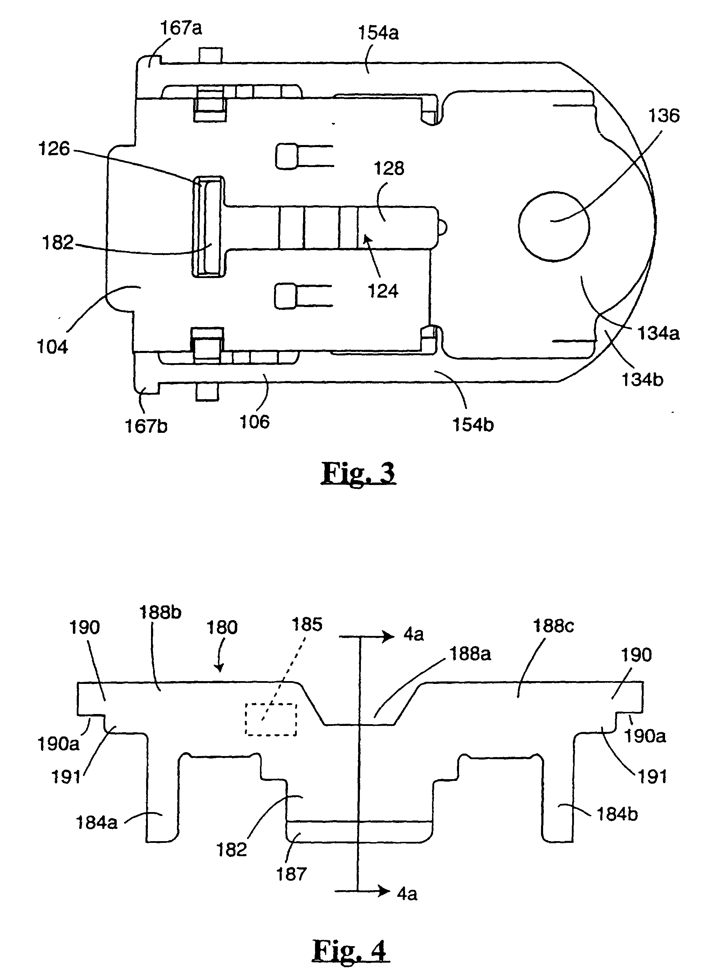

A buckle 100 includes a frame 102 having a lower frame part 104 and an upper frame part 106 which mates with the lower frame part 104. The buckle is covered by a protective hard plastic, hollow cover 342. The lower frame part 104 includes two upraised sides 108a, 108b. Each side includes a vertical slot 110, which serves as a guide for a vertically movable latch plate 180. Each side further includes a hole (generally round shaped) 112 in an extending lobe portion 113. The forward facing surface 109 of each side 108a, 108b is inclined and terminates in a sharp point 111, which is used to provide an interference fit with the buckle covering. The lower frame part 104 and the upper frame part 106 include a plurality of notches and grooves which permit these two frame parts to be mated together as shown in FIG. 2. With reference again to FIGS. 1 and 3, the frame part 104 includes a T-shaped slot 124 having a cross-slot (latch opening) 126, which receives a latch portion 182 of the latch plate 180, and an axially extending portion 128. The lower frame part 104 further includes an end piece 134a having an optional opening 136. The front of each side 108a, 108b includes a slot 140, which receives and aligns the lower frame part 104 to the upper frame part 106.

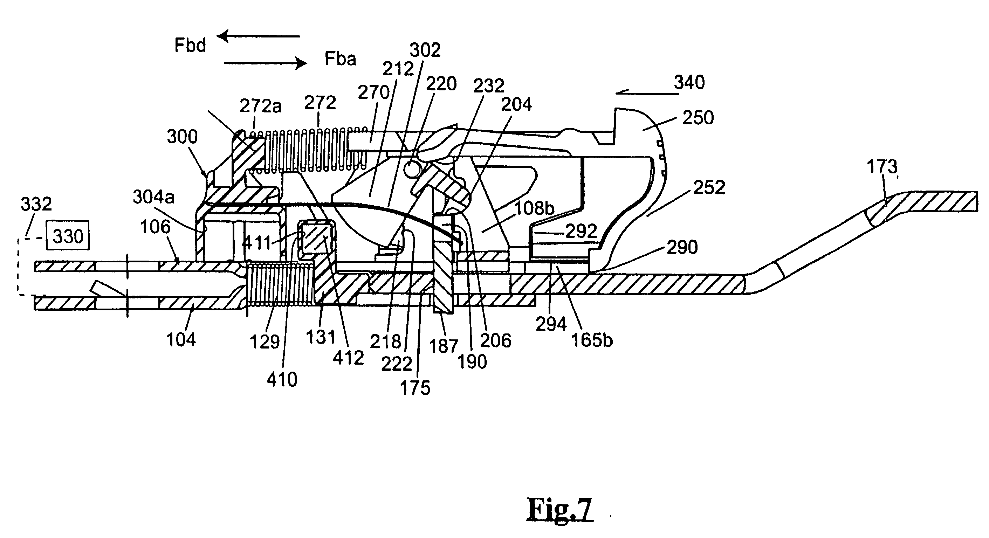

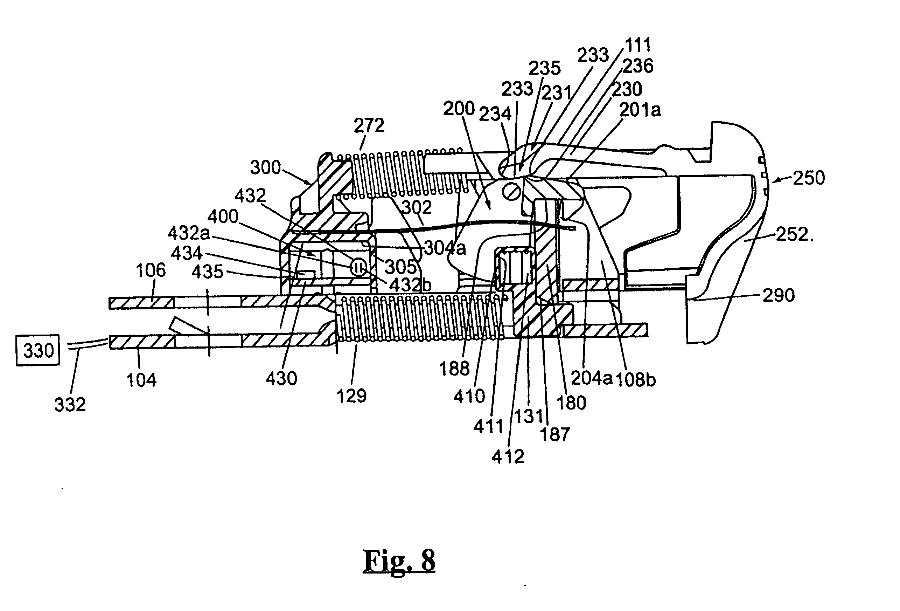

The upper frame part 106 is formed from a thin flat plate 150 having two sets of spaced openings 152a, 152b and 154a, 154b, a central opening 124b having a narrow extending slot 128b and cross slot 126b. Slot 128b, when in position upon the lower frame part 104, is generally collinear to and spaced above (see space 170) the axially extending slot portion 128 (in the lower frame part 104). One end 129a of an ejector spring 129 is sandwiched between the frame parts 104, 106 (at the narrow end 128c of slot 124b) and the other or free end 129b biases an ejector 131. The ejector 131 is generally rectangular shaped and is also received in the space 170 between the frame parts. The sides 131a, 131b of the ejector 131 are guided fore and aft against the axially extending portion 128a of T-shape slot 124a of the lower frame 104. The ejector further includes an upstanding projection 410, which defines a hollow chamber 411. A magnet 412 is press fit within the chamber. As related below the magnet 412 activates a reed switch when it is moved to its latched position. The magnet and reed switch are more clearly shown in FIGS. 7 and 8.

The upper frame part 106 includes an end piece 134b having an optional opening 136 of the same size as the opening 136 in the lower frame part 104. When the frame parts 104, 106 are attached, these openings are aligned one to the other. This configuration is shown in FIGS. 2 and 3. A cable or metal strap 332 (FIG. 7) can be attached (such as being riveted) to the buckle 100 through the end pieces 134a, 134b, in a known manner, typically through the aligned openings and attached to a belt tensioning device, which is also referred to as a pretensioner 330.

The assembly of the lower and upper frame parts is rather conventional and known in the art. The slots 152a, 152b of the upper frame part 106 are received within the slots 140 on the front of the sides 108a, 108b and the upper frame part is then rotated downward so that the sides 108a, 108b extend therethrough. The upper frame part 106 is laid upon the lower frame part 104 with medial portions 160a, 160b resting upon the top of the opposing slot or groove 116 in each side. The upraised ends 111a, 111b of each respective side 108a, 108b extend through a corresponding opening 154a, 154b. The front 161 of the upper frame part 106 is bent upwardly (FIGS. 1 and 2) so that when in place on the lower frame part 104 it cooperates to define a slot 170 (FIG. 2) through which a tongue 173 is received. The sides 165a, 165b of the upper frame plate 106 extend outward over the corresponding sides 167a, 167b of the lower frame part 104. A button 250 is movable on sides 165a, 165b.

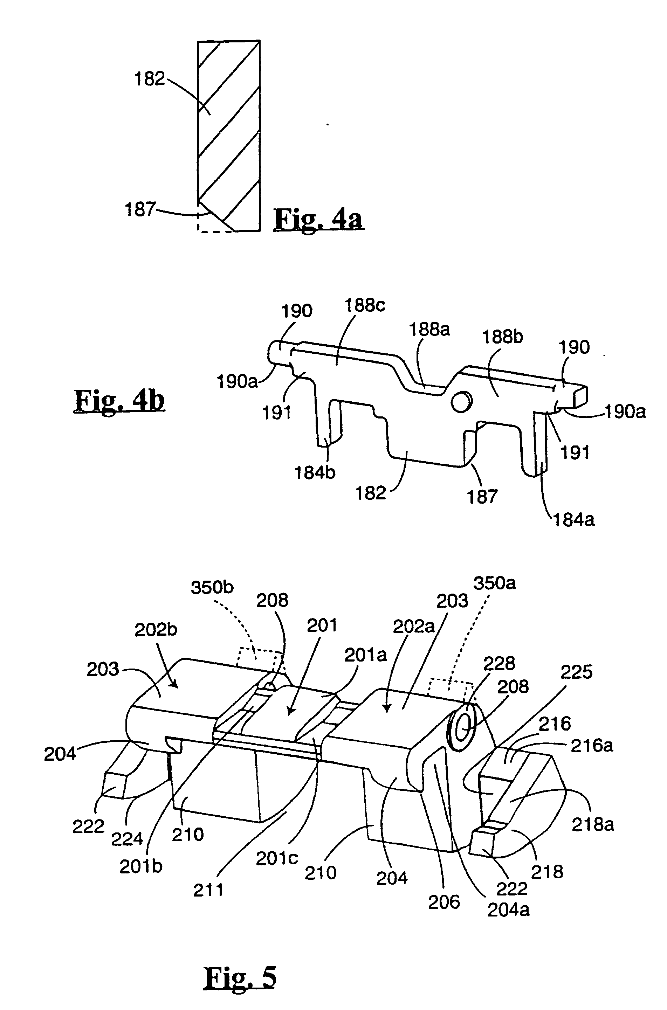

As mentioned, the latch plate 180 is movably situated upon the sides 108a, 108b. The latch plate 180, as shown in FIGS. 1, 2, 2a, 4a and 4b, includes the central latch portion 182 which when in a locked or latched position is received within the slots (latch openings) 126a, 126 b and within a latch receiving opening 175 of the tongue 173. The latch plate also includes two side legs 184a, 184b that are slidably received and guided in the frame slots 110, and two extending, typically square-shaped ends or wings 190. Each wing 190 includes a downwardly depending extension or member 191. The lower tip 187 (also FIG. 4a) of the central latch portion, which extends through slots 126a and 126b, may be chamfered or flat as shown in phantom line (FIG. 4a). The latch plate 180 further includes a top 188 having a lowered center portion 188a. A leaf spring 302 acts upon the top center portion 188a to bias the latch plate 180 downwardly into the slots 126a, 126b in the frame parts to its latched position (as shown in FIGS. 2 and 2a). During assembly the latch plate 180 is first slid into the right side slot 110 and then into the left side slot 110. To insure that the latch plate 180 is facing as illustrated in FIGS. 1 and 2, the latch plate 180 and the lower frame 104 include error proofing features to preclude the latch plate being installed in a reverse or opposite manner. These error proofing features include a projection 185 of the right hand, front facing surface (FIG. 1) on the latch plate and a complementary groove or keyway 185a formed in the right-hand slot. The projection can be shaped as a raised cylinder (FIG. 4b) or as a raised square or rectangle (FIG. 4c which is a view from the rear of the latch plate) or another similarly functioning shape. If the latch plate 180 is rotated 180° about a vertical axis it would not be possible to install it within the slot as the projection 185 would be blocked upon contacting side wall 108a.

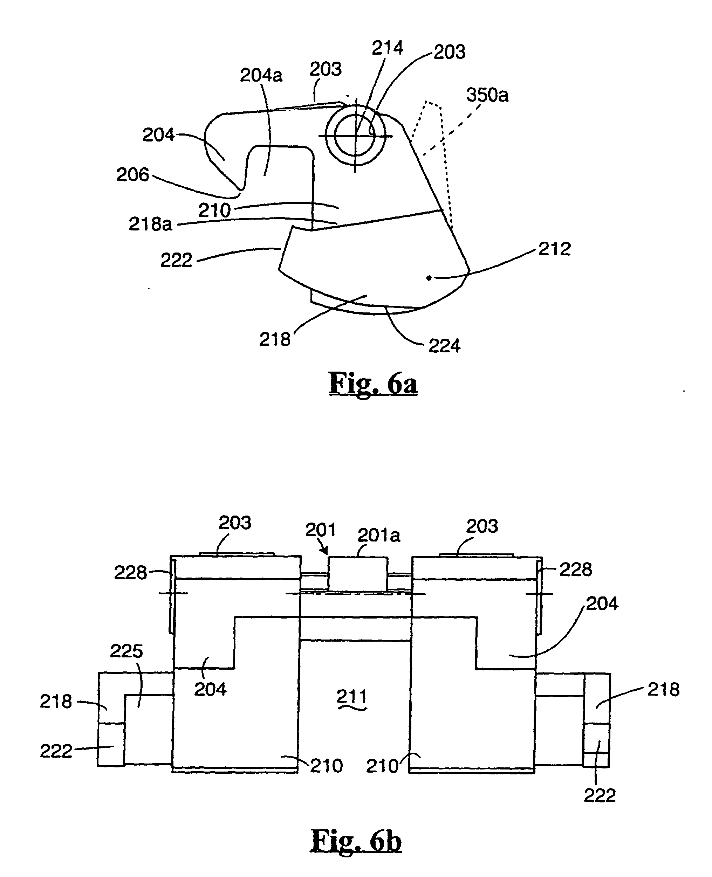

The latch plate 180 operates in conjunction with a weight or inertia mass 200. The weight 200 as shown in FIGS. 5, 6a and 6b includes a center section 201 and left and right (first and second) segments 202a, 202b which are generally the mirror image of each other. Each segment 202a, 202b includes a forward extending hook portion 204 (FIGS. 6a and 6b) defining a line contact or engagement surface 206, and a bore 208 through which is received the pin 220 (as shown in FIG. 2). Each hook 204 also defines a hooked recess 204a. The pin 220 and opposing bores 208 define an axis of rotation 214 (FIG. 6a) of the mass 200. Each segment 202a, 202b of the mass 200 includes a depending lobe 210 which extends below a corresponding bore 208, i.e. the axis of rotation 214, to assist in placing the center of gravity 212 of the mass 200 below the center of the axis of rotation 214. Each lobe 210 is spaced apart, this spacing shown by numeral 211. Each segment 202a, 202b further includes a laterally extending portion 216 and a forward extending portion 218. The tops 216a and 218a of the respective portions 216 and 218 (of each segment 202a, 202b) are generally co-planar but recessed below the respective top 203 of each segment 202a and 202b. Each forward extending portion includes a flat end or tip 222, which during pretensioner operation impacts with a corresponding depending member 191 of the latch. The bottom 224 of each portion 218 is arcuately shaped, the purpose of which is to provide clearance with portions of the push button 250 during rotation of the weight 200. Each portion 218 is spaced from a corresponding, depending lobe 210 to form a slot or groove 225. An optional anti-rattle spring such as torsion spring 226 may be used to bias the weight away from the frame and against the latch plate 180. As shown in FIG. 2, one leg of a torsion spring 226 is received within the top of a slot 110, while the other leg of the spring is received within the groove on the right-hand side of the weight to generate a counter-clockwise bias force on the weight. A second torsion spring may be similarly placed on the other side 108b of the frame and operate on the left-hand groove 225 of the weight. The anti-rattle spring may be implemented in a number of ways such as by fabricating one or more plastic, integral leaf spring or spring finger 226a (as shown in FIGS. 7, 8 and 9a) which extend down from an under surface of the top of the button and bias the weight toward the latch plate 180. Reference is again made to the center section 201. The top center 201a of this section 201 is at the level of the adjacent tops 203 of each segment 202a, 202b. The plastic button spring finger 226a, if used, rides on this top center section 201a. Side sections 201b, 201c are recessed below the top of the center section 201a (FIGS. 7 and 8). The spring finger 226a includes a flexible arm 230 having a tip 231. The lower surface 232 of the tip 231 contacts the center 201a of the weight. The lower surface 232 includes a front portion 233, a rear portion 234 and a center portion 235. The profile of each of the front 233 and rear 234 portions of the lower surface is circular in cross-section. The center 235 of the lower surface is flat and is tangent to the circular profile of the front 233 and rear 234 portions of the lower surface. With the latch plate in its unlatched position, as shown in FIG. 8, the front circular profile 233 rides on the rear edge 236 of the center section 201a and urges the weight downwardly onto the latch plate. With the latch plate 180 in its latched position, as shown in FIG. 7, the rear circular profile 234 is in contact with the rear edge 236 and similarly urges the weight downwardly.

Each lobe 210 includes an outward facing circular projection or stand-off 228 which serves to minimize sliding friction between lobe 210 and a corresponding portion of the inner wall 132a, 132b of the frame sides 108a and 108b respectively. The weight 200 in many of the previous FIGS. is shown with two upwardly extending ears 350a and 350b. These ears are optional in the preferred embodiment. To emphasize this optional feature the ears are shown in phantom line in FIGS. 5 and 6a.

The leaf spring 302 seen in FIG. 1 is supported by and is part of a spring assembly 300. The spring assembly 300 is also shown in FIGS. 7 and 8. The spring assembly 300 includes a body 304 having two small laterally extending, generally cube-like projections 306a, 306b, which are received into a corresponding slot 122 (FIG. 1) of frame parts 111a and 111b respectively. The body 304 also includes two spaced depending projections 308 (only one of which can be seen in FIG. 1) which extend below the main portion of body 304 and which are received within a corresponding slot 156a, 156b of the top frame part 106. It should be noted that the spring 302 is shown detached from the body 304 in FIG. 1. It is preferred that the body is injection molded about the rear spring end which includes a raised portion or rib 310.

While the rear end of the spring can be mechanically connected to the body, injection molding provides a number of benefits. The leaf spring 302 is always in the correct location, which prevents cocking of the leaf spring and in turn, provides an even and consistent distribution of forces on the top 188a of the latch plate 180. This allows the latch plate 180 to slide up and down without tilting to one side in the vertical slots 110 of lower frame 104. Additionally, the leaf spring 302 will not be damaged during hand assembly or misassembled as may happen if the leaf spring were mechanically secured to the spring body 304. The leaf spring will be at the correct height at all times so the latch plate 180 will have the correct force needed to overcome the frictional force of the ejector 131 on the latch plate and always engage the tongue 173.

The spring body 304 also includes a riser 320 having a boss 322, which receives the end 272a of push button spring 272. The body is also hollow and includes a cavity 304a into which a buckle-usage sensor such as a reed switch assembly 400 is inserted. The cavity 304a and reed switch assembly are more clearly shown in FIGS. 7 and 8. When the tongue 173 is inserted into the buckle 100, the ejector 131 is moved closer to the reed switch assembly and activates it. The inner or front wall 305 of the cavity is thinner than a corresponding outer or rear wall. This beneficially permits the placement of the reed switch closer to the magnet 312. The assembly generates a control signal signifying that the buckle is in its latched position. The assembly 400 includes a circuit board 430 on which a reed switch 432 is mounted. The reed switch includes two relatively movable reeds 432a, 432b shown diagrammatically in FIGS. 8 and 12. The circuit board also supports a control circuit 434 that is further illustrated in FIG. 12. The circuit 434 comprises a simple resistor network with resistor R1 connected in parallel with the reed switch 432. Resistor R2 is connected in series with resistor R1. When the two reeds are connected, resistor R1 is shorted out and the circuit's resistance is equal to R2. With the two reeds spaced apart, the circuit's resistance is equal to the sum of R1 and R2. The reeds 432a and 432b are normally closed and open as the magnet (carried by the ejector 131) approaches the latched position shown in FIG. 7. The output voltage, vo or circuit current, I, varies with the state of the reed switch (as measured by the change in output voltage or circuit current, and is communicated to a system controller (not shown), through one or more wires 435, which recognizes that the buckle 100 has been latched, typically about a seated occupant.

During the assembly of the upper and lower frame parts 104 and 106 the latch plate 180 is inserted between the guide slots 110 of the lower frame 104 so that its ends or wings 190 extend laterally from each side 108a, 108b respectively. The spring assembly 300 is secured to the upper frame part 106 so that the spring 302 fits upon the top 188a of the latch 180. Also during assembly, the ejector and ejector spring are placed between the frame parts 104 and 106. Thereafter the weight 200 is mounted to the frame 102. With the latch plate 180 in an elevated position within the guide slots 110, the hooks 204 are positioned in front of corresponding front portions 188c, 188d of the latch 180 with the forward extending portions 218 positioned below a respective end or wing 190. The weight 200 is manipulated so that its bore(s) 208 are co-linear with the opening 112 in each frame side 108a, 108b. Thereafter the pin 220 is inserted through the openings 112 and bores 208 to secure the weight to the frame 102. The sides 108a, 108b are positioned within a respective one of the slots 225 on either side of the weight 200. If an anti-rattle torsion spring 226 (or springs) is used, it is then secured about the pin 220 and to the frame (in the top of slot 110) and weight (in slot 225). As mentioned earlier, if the button 250 includes the spring finger 226a, the torsion spring 226 is eliminated.

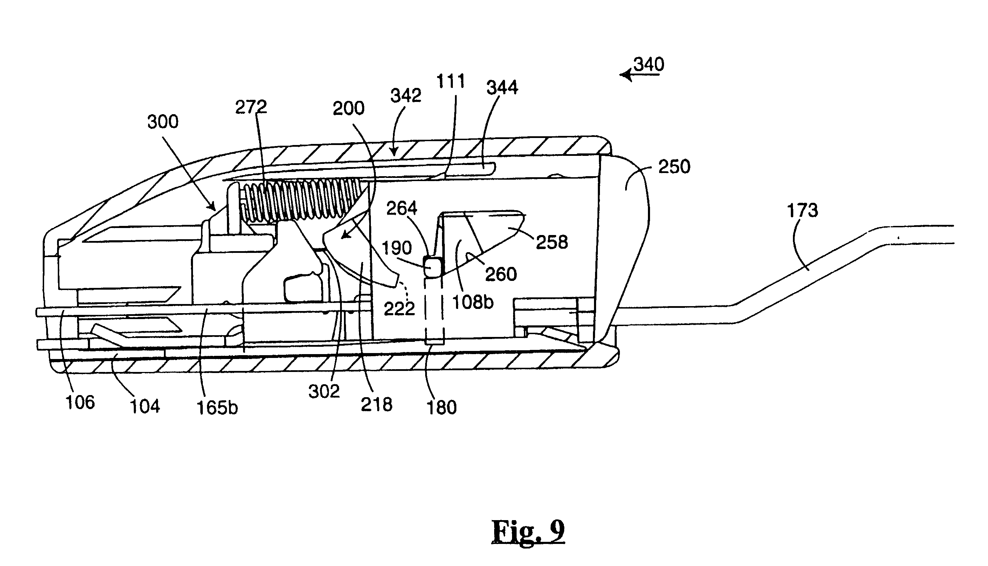

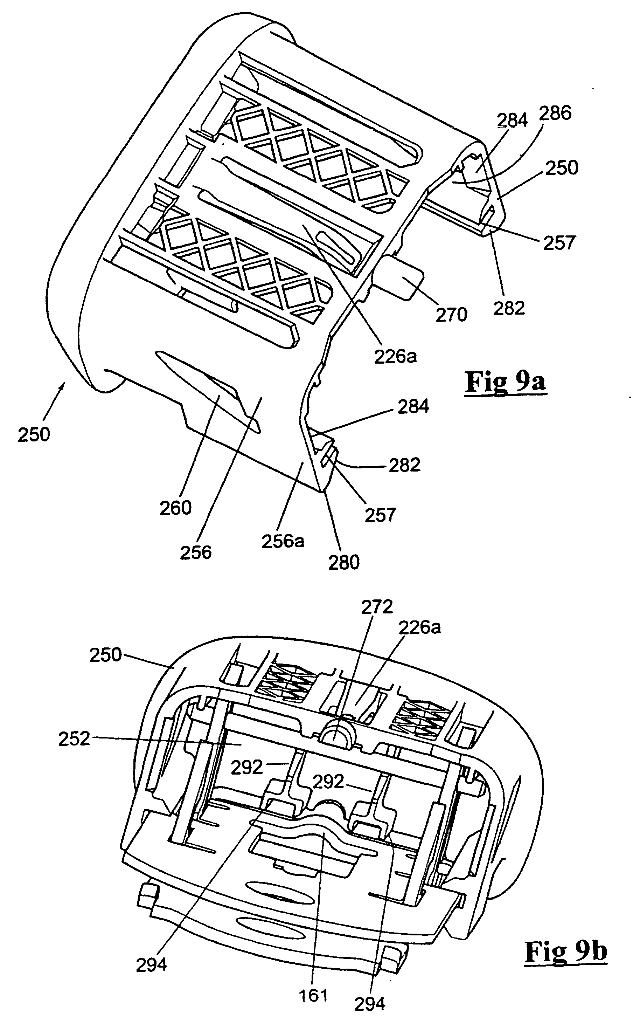

As mentioned above, the buckle 100 also includes a button 250. The button 250 is slidably received upon the frame 102. The button 250 includes an end 252, which is depressed (by its user) to release the tongue 173 from the buckle 100, a top 254 and extending sides 256. A partial lower portion 256a (FIG. 9a) of each side 256 of the button 250 includes an opposingly situated axial slot (or recess) 257 which receives and slides upon a corresponding extending side 165a or 165b of the upper frame part 106. The bottom of each lower side portion 256a is designated by numeral 280. Each bottom 280 includes a chamfer 282, which facilitates the assembly of the button to the frame. Each button side 256 additionally includes an opening, slot or recess 258 therein, one portion of which is formed as a ramp 260 which engages a lower surface 190a of a corresponding end or wing 190 and lifts same. A second portion of the slot (or recess) 258 is formed as a notch or horizontal guide 264 and is positioned over the ends 190 of the latch plate 180 to prevent the latch plate from lifting or being lifted out of the latch opening or slots 126a, 126b in the lower and upper frame parts and tongue slot 175. As also shown in FIG. 9a each side 256 of the buckle 250 further includes a respective ramp 284, which also facilitates the assembly of the button to the frame. The button is attached to the frame as follows. The latch plate 180 is moved to its unlatched portion in which the wings 190 are raised relative to the sides 165a, 165b of the upper frame part 106. One of the wings 190, such as the right-hand wing, is positioned against a corresponding ramp 284, on the right side of the button. The left-hand wing 190 is held against the end of the left side of the button. With the parts as identified, the left-hand wing will extend slightly beyond the left side of the button. Thereafter, the left side of the button is bent outwardly. This bending permits the left-hand wing 190 to rest on the left-hand ramp 284. The button is then pushed onto the frame until the wings 190 slide into a respective notch 264. In this configuration, the sides 165a, 165b of the upper frame part 106, will be positioned at the mouth of a respective ramp or chamfer 282 on each side of the button. Thereafter, each side 165a of the upper frame part 106 is pushed against a chamfer 284. A continued pressure snaps the side 165a into a corresponding slot 257. Side 165b is snapped into the button in the same manner.

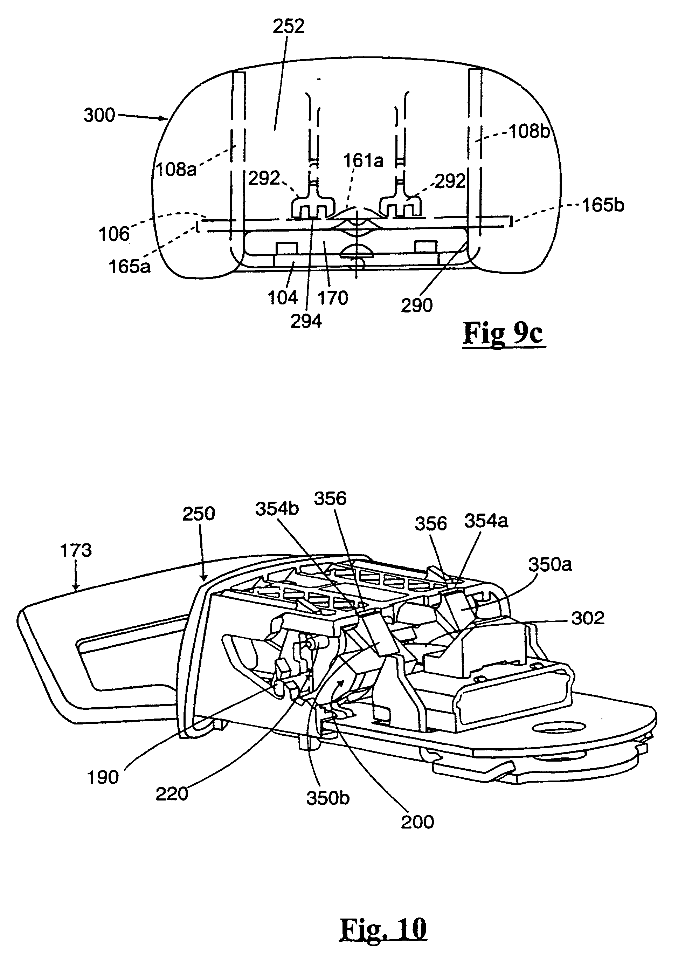

Reference is briefly made to FIGS. 9b and 9c. FIG. 9c is a front-end view showing the push end 252 of the button in relation to the frame. Only a portion of the lower frame 104 is visible. This view also shows that the end 252 of the button includes a recess or notch 290. With the button mounted on the frame, the notch 290 is in alignment with the tongue-receiving opening or slot 170. As can be appreciated from the various figures, the button 250 is hollow. The interior surface 252a (opposite to end 252) includes two projecting members 292. Each member 292 includes a lower surface 294, the lower end of which is closely spaced to the front 161 of the upper frame part 106 to prevent the tongue 173 from being inserted into the hollow interior of the button. The members 292 are located on each side of the bent portion 161a of the upper frame part 106. As illustrated, the lower surface 294 is notched (one notch in FIG. 9c, two notches in FIG. 9b, for example). The surface 294 will generally conform to the profile of the first end 161 of the upper frame part 106.

The top 254 of the button further includes a pin formation 270, which extends into a button bias spring 272. As can be seen from FIGS. 1, 7, 8 and 9, the end 272b of spring is received upon and supported by the pin 270. The other end 272a of spring is received upon the boss 322 of riser 320 of the spring assembly 300. The riser 320 provides a reaction surface for the bias spring 272.

Returning briefly to FIG. 8, this figure is a cross-sectional view illustrating the buckle 100 in its unlatched position and also shows the spring finger 226a acting on surface 201a of the weight 200. In this figure the latch plate 180 was previously lifted upwardly by the ramps 260 of the button 250 to place the latch in the position illustrated. More specifically, as the button was pushed in, the opposing ramps 260 engaged the bottom 190a of each end or wing 190 and lifted same to its unlatched or elevated position. As the latch plate 180 is urged upwardly, this motion pushes each wing 204 upwardly causing the weight to pivot about the pin 220 (in a counter-clockwise manner as seen in FIG. 8) against the bias force of the spring 226a. This rotation moves the wings 204 off of the top 188 of the latch plate 180 and permits the latch plate to become positioned within the groove or pocket 204a of each wing 204. Additionally, with the latch plate 180 in its elevated position, the ejector bias spring 129 has moved the ejector 131 forward such that it rests below and supports the tip end 187 of the latch plate 180.

FIG. 9 also shows the buckle in its latched condition (which is similarly shown in FIG. 7). To release the tongue 173 the button 250 is depressed (see direction of arrow 340). As the button is pushed to the right, the horizontal notch guide 264 over-travels the ends 190 of the latch plate 180 and the ramps 260 (on each side of the button 250) and after moving a short distance lifts the weight 200 and latch plate 180 upwards out of the slots 126a, 126b in the frame parts and the slot 175 in the tongue 173. Thereafter, the ejector 131 ejects the tongue from the buckle 100. Also as the button is pushed inwardly, the lower surfaces 294 slide over the front 161 of the upper frame part 106. FIG. 9 also shows the buckle parts enveloped by a single piece cover 342. The upper side of the top of the cover 342 includes two ribs 344 (only one is shown in FIG. 9). As the cover is slid about the frame, the tips 111 bite into a respective rib 344 to insure that the cover is securely retained to the frame.

Reference is again briefly made to FIGS. 7 and 9, which show many of the buckle parts in their respective positions with the tongue 173 latched in place. When the tongue 173 is inserted within the buckle, it engages the ejector 131 and moves it rearward permitting the spring 302 to urge the latch plate 180 downwardly into the openings 126a and 126b in the frame 102 and in the opening 175 in the tongue 173. As the latch plate 180 moves downward in the frame, the constant torque exerted on the latch plate 180 by the springs 226 or 226a causes the weight 200 to rotate about pin 220. With the latch plate in its latched position, the engagement wings 204 of the weight 200 will be rotated to a position upon the top 188 of the latch plate with the engagement surface 206 on the top of the latch plate. Additionally, with the latch plate in the above position, the end face 222 of each arm 218 will be positioned slightly behind each corresponding depending member 191. FIGS. 7 and 8 further illustrate the interaction of the button spring finger 226a on the weight 200. In FIG. 8 the curved under-tip 232 rests on the top center portion 201a of the weight 200 keeping the weight 200 in contact with the latch plate while the buckle is unlatched. As the tongue is inserted into the buckle and as the latch plate is forced into its latched position, the tip 231 applies a force to the top center portion 201a of the weight causing it to rotate. The spring finger continues to urge the wings 204 against the latch plate, which continues to reduce vibration.

The following describes the operation of the buckle 100 during pretensioner operation. Upon sensing a crash, the vehicle's electronic control unit (not shown) generates a signal to activate the pretensioner 330. A typical, pyrotechnic pretensioner of known construction includes a tube with a moveable piston therein. The piston is connected to the buckle ends 134a, 134b via a cable 332 (FIG. 7) initially accelerating the buckle in the direction of arrow 340. As the buckle is accelerated the frame parts move to the left (in FIG. 7) and the button 250 moves relatively to the right and is stopped by interaction with the ends or wings 190 of latch plate 180. During this very short time period the weight 200 tends to pivot in a counter-clockwise manner about the rod or pin 220 (the center of gravity of the weights is shown by numeral 212). The tendency of the weight 200 to move is stopped by the interaction of the end surface 222 of the weight 200 with the depending member 191 of the latch plate 180. This interaction generates a predominately horizontal force on the latch plate 180 and consequently there should be no or at least a very small component of force acting to lift the latch plate. However, any tendency of the latch plate 180 to be lifted by the rotation of the weight will be stopped by the guide 264. The guide is therefore optional in the present design. The inertial force acting on the button, during this accelerative phase, is shown as FBA.

Within 3-15 milliseconds of the activation of the pretensioner 330, the downward motion (motion to the left as seen in FIG. 7) of the buckle frame is rapidly decelerated as the buckle frame stops at the end of the travel of the pretensioner 330, typically about 80 mm. The button 250, which will move with the frame 102, will tend to stay in motion even after the buckle frame parts are rapidly stopped. The inertial force acting on the button, during this decelerative phase, is shown as FBD. During this decelerative phase of operation of the buckle 100, the weight 200 (due to the placement of its center of gravity 212) will tend to rotate clockwise. In the latched position of FIG. 7 the engagement surface 206 of each engagement hook 204 rests upon the top of the latch plate 180. The curvature of the hooks 204 in relationship to the flat profile of the top of the latch plate 180 provides for a line contact between each hook 204 and a respective mating portion of the latch plate 180. In this configuration the latch plate 180, and more particularly the center portion 182, is positioned within the various latch openings 126a, 126b and 173 in the frame and in the tongue. This configuration prevents the weight 200 from rotating in a clockwise direction. However, as mentioned above, in response to the decelerative forces' input to the weight 200, the weight will attempt to rotate in a clockwise direction thereby urging the hooks with greater force onto the latch plate 180. During this decelerative phase the button 250 will also tend to travel to the left (FIG. 7) and try to lift the latch plate out of the various slots. This motion is resisted by the inertial forces imparted to the latch plate 180 by the weight. To insure that the button 250 does not lift the latch plate 180 out of the various slots, the resultant force (or torque) generated by the weights must be greater than the force imparted by the button 250 to the latch plate.

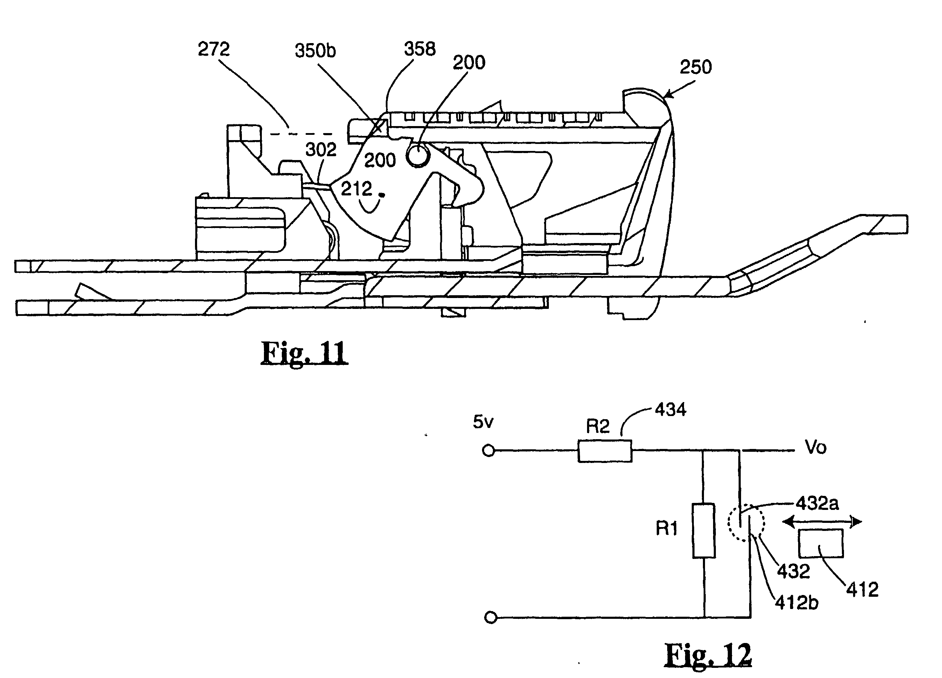

FIGS. 10 and 11 show in detail the use of the optional ears 352a and 354b as part of an alternate embodiment of the invention. The latch plate 180 is positioned through the openings in the upper and lower frame parts. The front face 352 of each of the ears 350a, 350b is flat. With the buckle 100 in its latched condition, the front face 352 of each projection 350a, 350b is oriented generally vertical and spaced (the space is shown by numeral 358 and is about 1 millimeter wide) from the base 356 of each notch 354a, 354b. As will be recalled, the button 250 is biased by spring 272 towards the top of the buckle that is away from the projections 350a, 350b. As will be seen, the base 256 of each notch 354a, 354b serves as a reaction surface, as such, it is not necessary to use an actual notch so long as a reaction surface is provided. The end face across the rear of the button 250, at a location of the bases 356, can be made flat thereby eliminating the notched contour.

The operation of this embodiment is basically identical to that of the buckle shown in FIG. 1. If, however, the inertial force or torque generated by the weight 200 on the latch plate 180 is not sufficient to counter the lifting force created by button on the underside of the wings 190 of the latch plate, the latch plate 180 will begin to rise as it reacts with the ramps 260 and the button will also move to the right as shown in FIG. 11. This slight added movement of the button 250 will place the base 356 in direct contact with the front face 352 of each of the projections 350a, 350b of the weight 200. (Because of the interdependence of the weight 200, due to the location of the engagement surface 206 with the top of the latch plate 180, the weight 200 will have been rotated slightly due to the upward motion of the latch plate). As can be seen from FIG. 11, the moment arm from the pin 220 to each ear 350a, 350b is less than the corresponding moment arm from the pin 220 to the center of gravity 212. Consequently, the inertial forces that are generated by the button at the ears 350a, 350b will be less than those generated by the center of gravity 212 about the pin 220, which are sufficient to prevent or block any further movement of the button during pretensioner firing. During the normal operation of the buckle, that is, during unlatching of the tongue 173 from the buckle, the ears or projections 350a, 350b are pushed backward by the advancing base or reaction surface 356 of the button 250 to rotate the weight 200. Additionally, as the button is moved inwardly the ramps 260 lift the latch plate 180 which in turn lifts the weight 200 at the wings 190 and rotates the weight.

## Claims

1. A seat belt buckle (100) operable with a pretensioner (330) for rapidly moving the buckle in a first direction a determinable distance to remove belt slack about an occupant, the buckle comprising:
a frame (102), adapted to be connected to the pretensioner (330), having a tongue receiving opening (170) to receive a tongue (173), the frame having at least a first latch opening (126a) therein and the tongue including a second latch opening (175), and opposing frame sides (108a,b), each side including a latch plate slot (110) arranged generally perpendicular to the first direction;
a latch plate (180), having side portions (184) guidably movable within the latch plate slots (110), the latch plate moveable between a latched position within the first latch opening (126a) in the frame and within the second latch opening (173) of the tongue and an unlatched position out of the latch and tongue openings; a pivoted weight (200) rotatable relative to the frame (102) and movable with the latch plate, the weight positioned upon a top portion of the latch plate when the latch plate is in its latched position; **characterized in that**
the weight (200) generating a force upon the latch plate during operation of the pretensioner tending to keep the latch plate in the first latch opening in opposition to forces generated by a button (250) acting on the latch plate as the button is moved toward the latch plate due to inertial forces which would be produced by operation of the pretensioner, wherein the weight further includes opposing extending portions (218) which are arranged relative to the depending extensions of the latch plate which swing into contact with these depending extensions, wherein this interaction between the wings and the depending extensions generates a predominately generally horizontal force so as not to create forces tending to lift the latch plate relative to the frame and
the button (250) being operatively received upon the frame and having lifting means (260) acting upon the wings of the latch plate for lifting the latch plate from its latched position to its unlatched position, and
the latch plate includes two oppositely extending wings (190), each wing having a depending extension (191).

## Patentansprüche

1. Sicherheitsgurtschnalle (100), die mit einer Vorspanneinrichtung (330) zum schnellen Bewegen der Schnalle in einer ersten Richtung um einen bestimmbaren Abstand bewegbar ist, um ein Durchhängen des Gurts um einen Benutzer zu entfernen, wobei die Schnalle umfaßt:
einen Rahmen (102), der adaptiert ist, um mit der Vorspanneinrichtung (330) verbunden zu sein, die eine Zungenaufnahmeöffnung (170) zum Aufnehmen einer Zunge (173) aufweist, wobei der Rahmen wenigstens eine erste Klinken- bzw. Verriegelungsöffnung (126a) darin aufweist und die Zunge eine zweite Verriegelungsöffnung (175) und gegenüberliegende Rahmenseiten (108a,b) enthält, wobei jede Seite einen Verriegelungsplattenschlitz (110) beinhaltet, der allgemein senkrecht zu der ersten Richtung angeordnet ist;
eine Verriegelungsplatte (180), die Seitenabschnitte (184) aufweist, die führbar innerhalb der Verriegelungsplattenschlitze (110) bewegbar sind, wobei die Verriegelungsplatte zwischen einer verriegelten Position innerhalb der ersten Verriegelungsöffnung (126a) in dem Rahmen und innerhalb der zweiten Verriegelungsöffnung (173) der Zunge und einer nicht verriegelten Position aus den Zungen- und Verriegelungsöffnungen bewegbar ist;
ein schwenkbares bzw. verschwenktes Gewicht (200), das relativ zu dem Rahmen (102) drehbar ist und mit der Verriegelungsplatte bewegbar ist, wobei das Gewicht auf einem oberen Abschnitt der Verriegelungsplatte positioniert ist, wenn sich die Verriegelungsplatte in ihrer verriegelten Position befindet; **dadurch gekennzeichnet, daß**
das Gewicht (200) eine Kraft auf die Verriegelungsplatte während einer Betätigung der Vorspanneinrichtung ausübt, die dazu tendiert, die Verriegelungsplatte in der ersten Verriegelungsöffnung entgegengesetzt zu Kräften zu halten, die durch einen Knopf (250) erzeugt werden, der auf die Verriegelungsplatte wirkt, wenn der Knopf zu der Verriegelungsplatte aufgrund von Inertialkräften bewegt wird, welche durch eine Betätigung der Vorspanneinrichtung erzeugt wurden, wobei das Gewicht weiterhin sich entgegengesetzt erstreckende Abschnitte (218) beinhaltet, welche relativ zu den herabhängenden Erstreckungen der Verriegelungsplatte angeordnet sind, welche in Kontakt mit diesen herabhängenden Erstreckungen schwingen, wobei diese Wechselwirkung zwischen den Flügeln und den herabhängenden Erstreckungen eine vorherrschend allgemein horizontale Kraft generiert bzw. erzeugt, um nicht Kräfte zu erzeugen, die dazu tendieren, die Verriegelungsplatte relativ zu dem Rahmen anzuheben, und
der Knopf (250) betätigbar auf dem Rahmen aufgenommen ist und Anhebemittel (260) aufweist, die auf die Flügel der Verriegelungsplatte zum Anheben der Verriegelungsplatte von ihrer verriegelten Position in ihre nicht verriegelte Position wirken, und
die Verriegelungsplatte zwei sich entgegengesetzt erstreckende Flügel (190) aufweist, wobei jeder Flügel eine herabhängende Erstreckung (191) aufweist.

## Revendications

1. Boucle pour ceinture de sécurité (100) fonctionnant avec un dispositif de prétension (330) pour déplacer rapidement la boucle dans une première direction d'une distance modulable pour enlever le mou de ceinture autour d'un occupant, la boucle comprenant:
une armature (102), adaptée pour être reliée au dispositif de prétension (330), possédant une ouverture de réception de languette (170) pour recevoir une languette (173), l'armature possédant au moins une première ouverture de verrouillage (126a) en son sein et la languette comprenant une seconde ouverture de verrouillage (175), et des flancs d'armature se faisant face (108 a,b), chaque flanc comprenant une encoche de plaque de verrouillage (110) agencée généralement de manière perpendiculaire à la première direction;
une plaque de verrouillage (180), possédant des parties latérales (184) mobiles qui peuvent être guidées à l'intérieur des encoches de plaque de verrouillage (110), la plaque de verrouillage pouvant être déplacée entre une position verrouillée à l'intérieur de la première ouverture de verrouillage (126a) dans l'armature et à l'intérieur de la seconde ouverture de verrouillage (173) de la languette et une position déverrouillée hors des ouvertures de verrouillage et de languette;
une masse pivotante (200) pouvant tourner par rapport à l'armature (102) et pouvant être déplacée avec la plaque de verrouillage, la masse étant positionnée sur une partie de sommet de la plaque de verrouillage lorsque la plaque de verrouillage est dans sa position verrouillée; **caractérisée en ce que**
la masse (200) générant une force sur la plaque de verrouillage durant le fonctionnement du dispositif de prétension tendant à maintenir la plaque de verrouillage dans la première ouverture de verrouillage en s'opposant aux forces générées par un bouton (250) agissant sur la plaque de verrouillage lorsque le bouton se déplace vers la plaque de verrouillage à cause des forces d'inertie qui seraient produites par le fonctionnement du dispositif de prétension; dans laquelle la masse comprend en outre des parties s'étendant en se faisant face (218) qui sont agencées par rapport aux prolongements dépendants de la plaque de verrouillage qui oscillent en contact avec ces prolongements dépendants; dans laquelle cette interaction entre les ailes et les prolongements dépendants génère une force à prédominance généralement horizontale de manière à ne pas créer de forces qui tendent à soulever la plaque de verrouillage par rapport à l'armature et
le bouton (250) étant reçu en fonctionnement sur l'armature et possédant un moyen de soulèvement (260) agissant sur les ailes de la plaque de verrouillage pour soulever la plaque de verrouillage de sa position verrouillée vers sa position déverrouillée, et
la plaque de verrouillage comprend deux ailes s'étendant en vis-à-vis (190), chaque aile possédant un prolongement dépendant (191).
